# EUROPEAN PATENT APPLICATION

(11) **EP 1 233 406 A1**
(43) Date of publication of application: **21.08.2002**
(21) Application number: 01103464.2
(22) Date of filing: 14.02.2001
(51) Int. Cl.: G10L 15/06

(54) **Speech recognition adapted for non-native speakers**

(71) Applicant: Sony International (Europe) GmbH, 10785 Berlin (DE)
(72) Inventor: Goronzy, Silke, Advanced Technology Cter Stuttgart, 70327 Stuttgart (DE); Kompe, Ralf, Advanced Technology Center Stuttgart, 70327 Stuttgart (DE)
(74) Representative: Müller - Hoffmann & Partner

(57) **Abstract**

To increase the recognition rate in processes for recognizing speech of a given target language (TL) which is spoken by a speaker of a different source language (SL) as a mother language, it is suggested to use pronunciation variants for said target language (TL) which are derived from said source languge (SL) without using non-native speech in said target langugae (TL).

## Description

The present invention relates to a method for generating pronunciation variants for a process of recognizing speech and further to a method for recognizing speech.

Methods and systems for recognizing speech for a given target language are usually trained on speech spoken by speakers which have said target language as their mother or native tongue or language.

A problem of prior art recognition methods and systems is that the recognition rates drastically decrease in cases where speech in said target language is uttered by a speaker who is not a native speaker of said target language but has a different source language as his mother or native tongue or language.

The reason for that is that the conventionally used pronunciations in prior art recognition methods and systems often strongly deviate from the pronunciations which are usually used by a non-native speaker.

To manage the problem of decreasing recognition rates for speech in a given target language given by a non-native speaker, it is common to enrich or enhance the dictionary or lexicon of the involved recognizer by adding non-native pronunciation variants or alternatives. The commonly and conventionally involved different possible ways to obtain these alternatives or variants for non-native pronunciations are very difficult to perform and very costly, as most of them try to collect utterances in said target language uttered by non-native speakers who have said given source language as their mother or native tongue or language. Or they use hand-drafted rules that predict pronunciations for the target language if the source language is known.

It is therefore an object of the present invention to provide a method for generating pronunciation variants and a method for recognizing speech in which pronunciation variants for a given target language spoekn by non-native speakers are obtained in a particular easy manner, in particular without the need of having non-native, i. e. accented, speech. All that is needed is native speech in the two languages, i. e. in the source and in the target language - under consideration.

The object is achieved by a method for generating pronunciation variants according to claim 1 and by a method for recognizing speech according to claim 15. Preferred embodiments are within the scope of the respective dependent subclaims. The object is further achieved by a system and by a computer program product according to claims 19 and 20, respectively.

The method for generating pronunciation variants according to the present invention is particularly provided for a process of recognizing speech in at least one given target language and/or dialect. The inventive method for generating pronunciation variants is characterized in that native speech of at least one and with respect to said target language and/or dialect native speaker is analyzed using a recognizing system or the like to derive pronunciation rules and/or variants, in particular for accented speech of said target language and/or dialect. Further, a recognizing system is used which is designed for and/or trained in at least one given source language and/or dialect.

It is therefore an essential idea of the present invention to use speech of native speakers only to extract and generate pronunciation variants and/or rules for at least one given target language in particular by using a recognizing system trained on said source language. Accordingly, the inventive method for generating pronunciation variants is less time-consuming and less costly as speech data bases for different source languages spoken by speakers who have said source language as their mother or native tongue or language are much easier available than conventionally involved speech data bases in which said given target language is spoken by non-native speakers whose mother or native tongue or language is said given source language.

Additionally, it is a key idea to design and/or train the involved recognition system in a source language which is different from the target language to be recognized. The step of deriving pronunciation variants and/or rules is carried out by applying after the training session native speech of the target language to the recognizing system which is designed for the source language. The key idea is therefore to use a "wrong" recognizing system and the selected source language therefore gives the certain accent to be derived as pronunciation variants and/or rules for the target language.

In the sense of the invention the notions language and dialect are always meant together unless the contrary is stated.

According to a preferred embodiment of the present invention said recognizing system is - in at least a preprocessing step - trained in at least said given source language and/or dialect.

Additionally, it might be advantageous to use speech in said source language and/or dialect of at least one and with respect to said source language and/or dialect native speaker for training.

According to a further preferred embodiment of the inventive method for generating pronunciation variants, sets of pronunciation variants and/or rules are derived from said analysis in each case as pronunciation variants and/or rules of speakers of said source language as a mother or native tongue or language trying to speak said target language as a foreign language. Therefore, the obtained pronunciation variants and/or rules more or less describe said target language which is uttered in an accented way by the non-native speaker.

The new variants are advantageously generated by applying said derived pronunciation rules and/or variants to a given starting lexicon for said target language. This is done in particular to enrich said starting lexicon to yield a modified lexicon which then includes the newly derived pronunciation rules and/or variants. This is particularly important for a recognition process for said target language and/or achieved by including pronunciation variants describing an accented pronunciation being specific for said source language or native language of the non-native speaker.

A particular easy starting point for the inventive method is obtained by using a canonical lexicon as said starting lexicon in which pronunciations and/or variants only of native speakers of said target language are initially contained.

To generate said new pronunciation rules and/or variants it is preferred to employ a recognition process or system which is specific for said source language being different from said target language.

Additionally, said recognition process or system for generating pronunciation variants or rules contains or is based on at least one language model, and a set of hidden Markov models, which are particularly trained on said source language.

According to a further preferred embodiment of the inventive method for generating pronunciation variants and/or rules, said recognition process or system for generating pronunciation variants or rules contains or is based at least on a phone loop structure for recognizing sequences of phones, phonemes and/or other language elements or the like.

The recognition process or system for generating pronunciation variants and/or rules may be performed in an unrestricted way, e. g. by using no language model at all. Nevertheless, it is of particular advantage to restrict the recognition process or system for generating pronunciation variants and/or rules to phone, phoneme and/or language element sequences which are indeed contained in said source language. It is in particular advantageous, to employ a restriction which is based on a n-gram structure, in particular on a bi-gram structure, or the like, of the source language.

To further increase the variety of possible pronunciation rules and/or variants the speech of a variety of speakers of said target language as said mother or native tongue or language is analyzed so as to increase the set of pronunciation variants and/or rules for said target language.

According to a particular easy embodiment of the inventive method for generating pronunciation variants and/or rules said method is trained in advance of a process for recognizing speech based on training data, in particular by evaluating a given speech data base for said source language.

On the other hand, in some applications it may be necessary and advantageous that the method is trained during the application to a process of recognizing speech of said target language by a speaker of said source language as said mother or native tongue or language.

According to a further preferred embodiment said language model and/or said n-gram structure for restriction are modified by evaluating said recognition process and in particular said recognition results, in particular so as to simulate the process of memorizing by a human listener.

The suggested method for generating pronunciation variants and/or rules can according to the other solution of the object advantageously be applied to or involved in a method for recognizing speech of at least one target language.

According to a preferred embodiment of the inventive method for recognizing speech it is suggested to carry out the generation of pronunciation variants and/or rules at least in part as a pre-processing step, in particular in advance to the process of recognizing speech in said target language.

On the other hand, during the process of recognizing speech it may be of further advantage to carry out the generation of further pronunciation variants and/or rules at least in part during the process of recognizing speech of said target language, so as to further increase the variety of possible pronunciation variants and/or rules and therefore to increase the recognition rate of the inventive method for recognizing speech.

To further increase the flexibility of the inventive method for recognizing speech a variety of different source languages and/or a variety of different target languages is involved. It is therefore possible, to construct and train a method for recognizing speech to generally recognize speech in any target language uttered in an accent based on any other source language. Such a method could be employed for example in a tourist information system in which case it is not a priori known which speaker of which native language uses the system to obtain information in a chosen or desired target language.

Further aspects of the present invention will become apparent from the following remarks:

The recognition of non-native speech imposes big problems to nowadays speech recognition systems, which are usually trained on native speech data.

Usually recognition rates decrease drastically in cases where a target language is uttered by non-native speakers. The reason for that is that the used pronunciation by the non-native speaker severely deviates from the expected one. One way to cope with this problem is to enhance the recognizer dictionary with non-native pronunciation alternatives or variants. Although there are different possible ways to get these alternatives, they are generally very costly.

The proposed and inventive method to derive alternatives or variants for pronunciations of non-native speakers uses models, which are trained on native speech, i. e. the models are trained on a foreign source language which is the mother or native tongue or language of the speaker to derive the pronunciation variants or rules for the target language.

This results in rules or variants for the pronunciation in the target language with accents of the source language. For instance, if the source language is English and the target language is German, one gets as results rules and variants for English accented German.

This saves effort in a tremendous way because already existing native speech data bases can be employed and evaluated.

In the sense of the invention the native or mother tongue or language of a speaker is referred to as source language. The target language is the language the speaker is trying to speak. E. g. for an English native speaker who currently speaks German the source language would be English and the target language would be German.

In the following some remarks and properties of conventional approaches to deal with the above described problems are given.

One approach is the training of acoustic models, e. g. of HMMs, using non-native or accented speech. Although improving the recognition results, this approach is mainly only applicable if only one source language is involved. If the models would be trained using more than one source language, i. e. speech with many different accents, the resulting models would be too diffuse and thus reducing the performance for native speech, which is not desired. Also, this approach does only work if triphones are used, because then the phonemes are modelled in various contexts allowing for different pronunciations of a phoneme depending on the context. If a strong tying is used, this approach does not work anymore. But for embedded applications often monophones or strongly tied triphones are used because of the memory and time requirements of many applications.

The application of the derived rules and/or variants to a recognition process can be performed as follows. The rules are applied to a lexicon of the target language. This means that canonical pronunciations are used and the generated rules are applied to them resulting in new pronunciation variants which are in particular specific to the speaker's accent. The so generated new pronunciation variants may be added to the lexicon to yield an enriched and modified lexicon that now contains several pronunciations for one given word.

As already stated above, the way a human speaker or listener of a source language is hearing the target language could advantageously be taken into account. That means that several instances of the same utterance in the target language spoken by different speakers - having said target language as their native language - may be evaluated.

The conventional way of recognizing each utterance with the above described phoneme recognizer means that the utterance is decoded without memorizing previous utterances. A human listener however, would memorize different utterances received in the past. Even if the listener never heard the target language before he would and could after hearing a given utterance several times evaluate the different forms of the same utterance when trying to reproduce it.

Accordingly, it is advantageous to simulate the memorizing effect in the embodiments of the methods for generating pronunciation variants and/or rules and for recognizing speech.

This could be achieved by using all previously recognized utterances to modify a phoneme n-gram of the language model which is employed in the phoneme recognizer. Accordingly, previous utterances would guide the recognizer to some extent to ensure that the recognized phoneme sequences for the same utterance become similar to each other.

The above mentioned phone recognizer may have the structure of a so-called loop recognizer which is a speech recognition system in the usual sense apart from the lexicon and/or the underlying language model. The lexicon of the phone loop recognizer does in contrast to the usual structure comprise no words. Only phonemes and sequences of phonemes are contained on the basis of the source language under consideration. Therefore, a phone loop recognizer recognizes phoneme sequences only during the recognition process. To avoid arbitrary phoneme sequences restrictions may be included by constructing and including phoneme n-grams. Therefore, it is possible to restrict the sequences to their actual appearance in the source language under consideration.

It is a further aspect of the present invention to provide a system, an apparatus, a device and/or the like for generating pronunciation variants and/or rules and/or for recognizing speech which is in each case capable of performing the inventive methods for generating pronunciation variants and/or rules and/or for recognizing speech.

According to a further aspect of the present invention a computer program product is provided, comprising computer program means which is adapted to perform and/or realize the inventive method for generating pronunciation variants and/or rules and/or the inventive method for recognizing speech when it is executed on a computer, a digital signal processing means and/or the like.

In the following the invention will be described taking reference to a schematical drawing of a preferred embodiment of the present invention.
- **Fig. 1**: is a schematical block diagram of a preferred embodiment of the method for generating pronunciation variants and/or rules according to the present invention.
- **Fig. 2**: is a schematical block diagram showing a training session according to the present invention.
- **Fig. 3**: is a schematical block diagram of an embodiment of the inventive method for recognizing speech.
- **Fig. 4**: is a schematical block diagram showing a conventional training session.

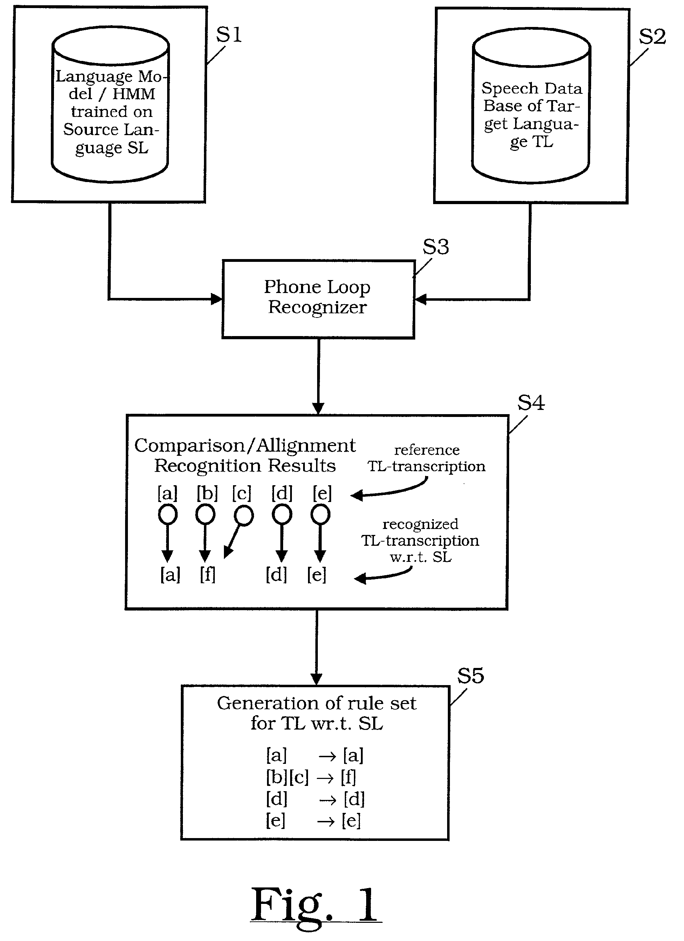

In the block diagram of Fig. 1 step S1 describes the construction of a language model and of a set of hidden Markov models (HMM) and their training with respect to a given source language SL. This training can be performed by evaluating a speech data base for the source language. On the other hand, a speech data base for the target language TL must be provided as shown by step S2 in Fig. 1.

According to step S3 of Fig. 1 a recognizing process based on the language model of step S1 is applied to the speech data base of the target language TL so as to compare with respect to the recognition result of the phone loop recognizer in step S3 the target language reference description, i. e. the German reference transcription, with the recognized target language transcription on the basis of the source language.

According to said comparison in step S5 of Fig. 1 an assignment between these transcriptions is made to yield a rule-set for the pronunciations in the target language TL on the basis of the source language SL. This assignment could e. g. be done by decision trees.

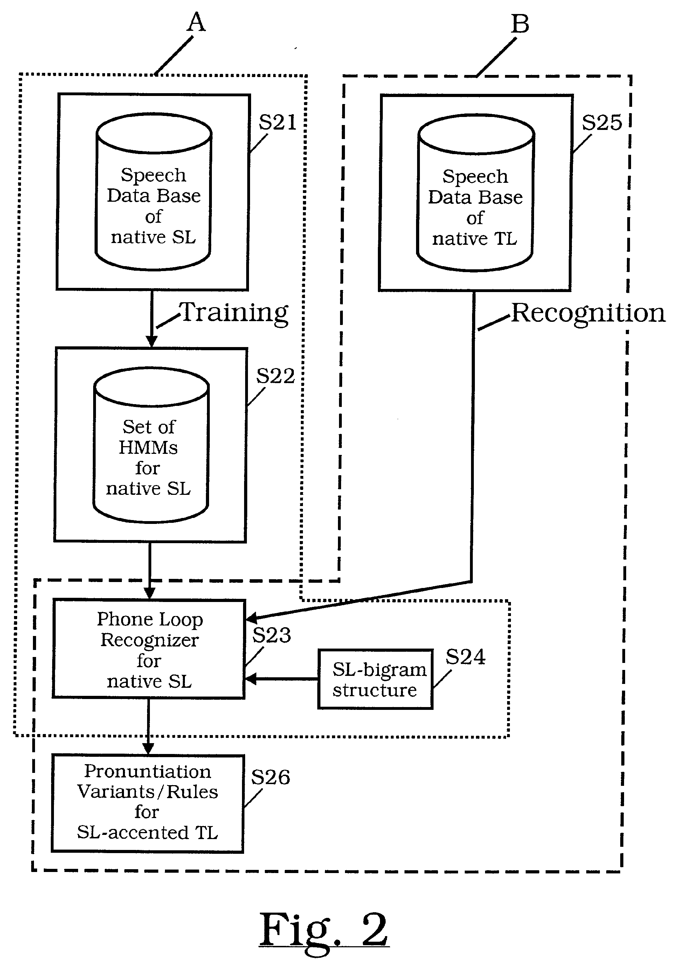

By means of a schematical block diagram Fig. 2 illustrates a training session and the process of generating pronunciation variants and rules in accordance to the present invention.

The training session A starts with a speech data base of native speech in the given source language SL in step S21. The speech data base for native source language SL is used in the following step S22 to train a set of hidden Markov models to yield a set of SL-models. The training is completed by generating a phone loop recognizer and a n-gram or bi-gram structure for the source language SL in steps S23 and S24. The result is a recognizing system which is designed for the source language SL.

The generating section B is performed by applying a speech data base for native speech of the target language TL from step S25 to the phone loop recognizer trained on SL in step S23. In step S26 the results are obtained as a set of pronunciation variants and/or rules for said target language TL accented in said source language SL.

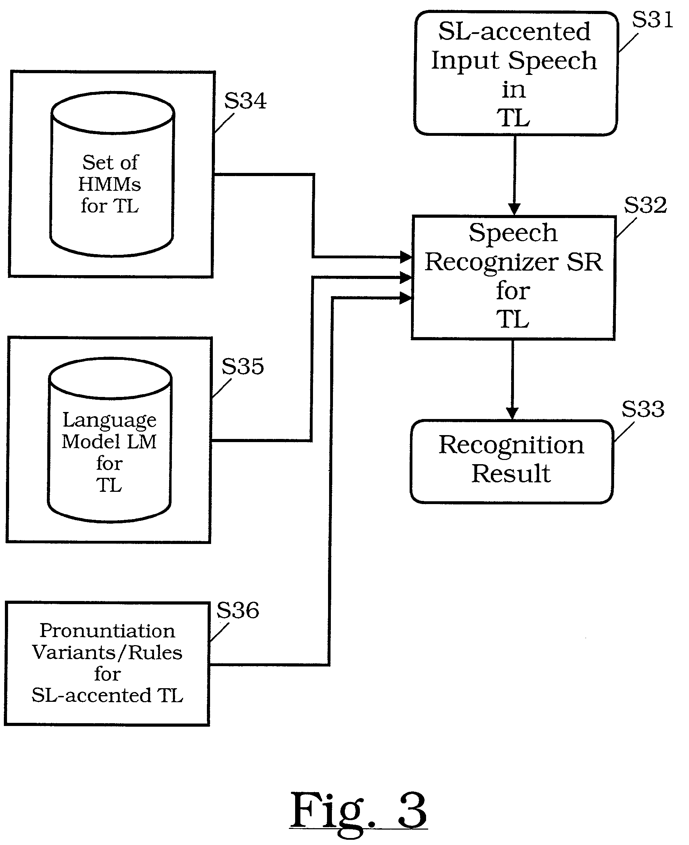

Also by means of a schematical block diagram Fig. 3 shows a speech recognizing system employing the inventive method for recognizing speech, in particular for a given target language TL.

Accented speech in said target language TL of step S31 is input to a speech recognizing system SR designed for said target language TL in step S32. Involved in the speech recognizer SR is a set of hidden Markov models of step S34 designed for the target language TL and a language model LM in said target language TL of step S35. The invention is employed by using a derived dictionary of step S36 comprising the accented pronunciation variants and/or rules of step S26 of Fig. 2. By employing this enriched dictionary of step S36 the speech recognizer SR according to the embodiment of Fig. 3 is capable of recognizing said target language TL which is accented by said source language SL.

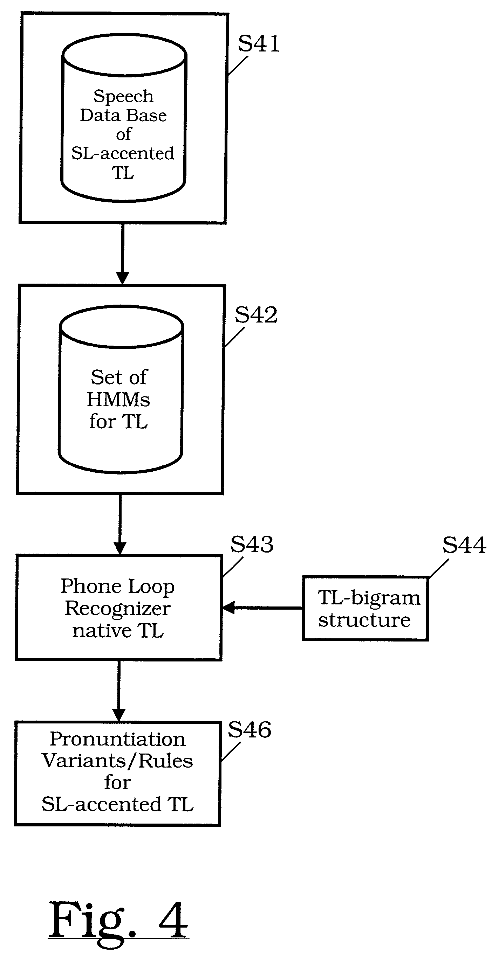

Fig. 4 shows a training session which is conventionally employed to derive accented pronunciation variants and/or rules. The starting point here is a speech data base of step S41 of said target language TL which contains accented speech with respect to said source language SL. Such a data base is not easy to obtain and providing such a data base is therefore highly expensive.

The obtained speech data base for SL-accented speech in TL of step S41 is input to a phone loop recognizer designed for TL involving TL-trained hidden Markov models (HMM) and TL-bi-grams in steps S42, S43 and S44, respectively. The result is a set of pronunciation variants and/or rules in step S46 which may be used to enrich a pronunciation dictionary or the like.

## Claims

1. Method for generating pronunciation variants, in particular for a process of recognizing speech, in at least one given target language (TL) and/or dialect,
- wherein speech of at least one and with respect to said given target language (TL) and/or dialect native speaker is analyzed using a recognizing system (SR) to derive pronunciation variants and/or rules for in particular accentd speech in said target language (TL) and/or dialect and
- wherein a recognizing system (SR) is used which is designed for and/or trained in at least one given source language (SL).

2. Method according to claim 1, wherein said recognizing system (SR) is - in at least a preprocessing step - trained in at least said given source language (SL) and/or dialect.

3. Method according to claim 1 or 2, wherein speech in said source language (SL) and/or dialect of at least one and with respect to said source language (SL) and/or dialect native speaker is used for training.

4. Method according to anyone of the preceding claims, wherein sets of pronunciation variants and/or rules are derived from said analysis in each case as pronunciation variants and/or rules of speakers of said source language (SL) as a mother tongue or native language trying to speak said target language (TL) as a foreign language.

5. Method according to anyone of the preceding claims, wherein new pronunciation variants are generated by applying said derived pronunciation rules to a given starting lexicon for said target language (TL), in particular so as to enrich said starting lexicon to yield a modified lexicon, in particular for a recognition process for said target language (TL).

6. Method according to claim 5, wherein a canonical lexicon is used as said starting lexicon in which pronunciation variants and/or rules only of native speakers of said target language (TL) are initially contained.

7. Method according to anyone of the preceding claims, wherein a recognition process or system (SR) which is specific for said source language (SL) is employed for generating pronunciation variants and/or rules.

8. Method according to claim 7, wherein said recognition process or system (RS) for generating pronunciation variants and/or rules contains or is based on at least one language model and a hidden Markov model, which is particularly trained on said source language (SL), in particular by native speech.

9. Method according to claim 7 or 8, wherein said recognition process or system for generating pronunciation variants contains or is based on at least a phone loop structure for recognizing sequences of phones, phonemes and/or other language subunits or the like.

10. Method according to anyone of the claims 7 to 9, wherein said recognition process or system (SR) for generating pronunciation variants and/or rules is restricted by a n-gram structure, in particular by a bi-gram structure, or the like, in particular trained on said source language (SL).

11. Method according to anyone of the preceding claims, wherein speech of a variety of speakers of the target language (TL) and/or dialect as a native or mother language is analyzed so as to further increase the set of pronunciation variants and/or rules for said target language (TL).

12. Method according to anyone of the preceding claims, which is trained in advance of a process for recognizing speech based on training data, in particular by evaluating a given speech data base of said target language (TL) and or dialect.

13. Method according to anyone of the preceding claims, which is trained during the application to a process of recognizing speech of said target language (TL) by a speaker of said target language (TL) as a native or mother language.

14. Method according to claim 13, wherein said language model and/or n-gram structure for restriction are modified by evaluating said recognition process and in particular the recognition results so as to simulate memorizing by a human listener.

15. Method for recognizing speech of at least one target language (TL), wherein a method for generating pronunciation variants according to anyone of the claims 1 to 14 is involved.

16. Method according to claim 15, wherein the generation of pronunciation variants is carried out at least in part as a pre-processing step, in particular in advance of recognizing speech in said target language (TL).

17. Method according to claim 15 or 16, wherein the generation of pronunciation variants is carried out at least in part during the process of recognizing speech of said target language (TL).

18. Method according to anyone of the claims 15 to 17, wherein a variety of different source languages (SL) and/or of target languages (TL) is involved.

19. System for generating pronunciation variants and/or rules and/or for recognizing speech which is capable of performing the method according to anyone of the claims 1 to 14 and/or the method according to anyone of the claims 15 to 18.

20. Computer program product, comprising computer program means adapted to perform and/or realize the method for generating pronunciation variants and/or rules according to anyone of the claims 1 to 14 and/or the method for recognizing speech according to anyone of the claims 15 to 18 and/or the steps thereof when it is executed on a computer, a digital signal processing means and/or the like.
